# EUROPÄISCHE PATENTSCHRIFT

(11) **EP 2 502 681 B1**
(45) Veröffentlichungstag und Bekanntmachung des Hinweises auf die Patenterteilung: **19.08.2015**
(21) Anmeldenummer: 12160283.3
(22) Anmeldetag: 20.03.2012
(51) Int. Cl.: B08B 9/043, F16L 25/00, F16L 33/00, G03B 37/00, B08B 9/027, B08B 9/04, B08B 9/051

(54) **Vorrichtung zum Untersuchen und Reinigen von Rohren und Leitungen**
Device for investigating and cleaning tubes and lines
Dispositif d'examen et de nettoyage de tuyaux et conduites

(30) Priorität: 22.03.2011 DE 202011000650 U
(43) Veröffentlichungstag der Anmeldung: 26.09.2012
(73) Patentinhaber: Riezler, Josef, 87448 Waltenhofen (DE)
(72) Erfinder: Riezler, Josef, 87448 Waltenhofen (DE)
(74) Vertreter: Hutzelmann, Gerhard

(56) Entgegenhaltungen:
- WO-A1-2006/127095
- DE-A1- 10 255 221
- DE-A1- 19 607 913
- JP-A- 5 331 905
- JP-A- 11 114 513
- US-A1- 2005 045 751

## Beschreibung

Die Erfindung bezieht sich auf eine Vorrichtung zum Untersuchen und Reinigen von Rohren und Leitungen, insbesondere von Abwasserleitungen.

Es sind verschiedene derartige Vorrichtungen bekannt. Jedoch weisen alle diese Vorrichtungen den Nachteil auf, daß diese zunächst mit einem Reinigunskopf ausgerüstet zum Rohrreinigen eingesetzt werden und anschließend dann zurückgezogen werden müssen um auf Inspektion, also auf Kamera Betrieb umgebaut und nochmals eingeführt werden müssen.

Dies bedeutet mindestens doppelten Zeitaufwand. Zudem ist es alles andere als trivial, Abzweigungen und Knicke von Rohren zu durchfahren. Oftmals werden dazu Stricke oder Schnüre eingesetzt um diese durchfahren zu können. Dies bedeutet nochmals größeren Zeitaufwand.

Für den Betrieb der Kamera werden an den eingesetzten Hochdruckschlauch, der als Schiebedraht dient, Leitungen angeklebt und mit eingeschoben. Dies sorgt nochmals für Behinderungen beim Einfahren.

Das Dokument WO 2006/127095 offenbart auch eine Vorrichtung zum Untersuchen und Reinigen von Rohren und Leitungen.

Der Erfindung liegt die Aufgabe zugrunde, eine Vorrichtung vorzuschlagen, die in einem Arbeitsgang zunächst zum Rohrreinigen und danach zur Kontrolle der durchgeführten Reinigungsarbeit und zur Kanalkontrolle an sich eingesetzt werden kann.

Diese Aufgabe wird erfindungsgemäß gelöst durch den Gegenstand des vorliegenden Anspruchs 1.

Durch die Kombination kann beim Einfahren der Reinigunsgkopf zum Reinigen eingesetzt werden und beim zurückziehen die Kamera zur Kontrolle. So ist es auch möglich, wenn bei der Kontrolle noch Reste von Verunreinigungen festgestellt werden, diese mit einer Nachreinigung an Ort und Stelle zu entfernen.

Eine coaxiale Leitungsverbindung ist zwischen Reinigungskopf und abgewandtem Ende des Hochdruckschlauches vorgesehen, wobei der Außenleiter durch das Mantelgeflecht gebildet ist und ein Innenleiter im Inneren des Hochdruckschlauches vorgesehen ist.

Damit kann auf eine getrennte Steuerleitung verzichtet werden. Eine Beschädigung der Leitung wird ebenso vermieden, wie ein Verheddern der Leitung im Rohr.

Eine weitere vorteilhafte Ausgestaltung der Erfindung liegt auch vor, wenn ein Endstück am dem Reinigungskopf zugewandten Ende des Hochdruckschlauches vorgesehen ist, das zwischen dem Reinigungskopf und dem Hochdruckschlauch eine elektrische Verbindung in Bezug auf Innen- und Außenleiter herzustellen vermag.

Damit lässt sich auf einfache Art und Weise der Innenleiter im Schlauch befestigen. Zudem wird eine sichere Kontaktierung zwischen Leiter, Schirm und Reinigungskopf gewährleistet.

Erfindungsgemäß hat es sich auch als sehr vorteilhaft erwiesen, wenn am vom Reinigungskopf abgewandten Ende des Hochdruckschlauches eine Auskopplung für die Coaxialverbindung vorgesehen ist.

Damit kann sehr einfach das Kamerasignal empfangen und Steuersignale gesendet werden.

Die Erfindung ist auch darin zu sehen, daß der Reinigungskopf eine oder mehrere am Umfang angeordnete Steuerdüsen aufweist, die wahlweise ansteuer- und schaltbar ausgebildet sind.

Mit diesen Düsen lässt sich der Reinigungskopf gezielt in eine Richtung bewegen. So kann diese sehr einfach in Abzweigungen von Rohren einfahren. Zur Kontrolle der Position wird das Kamerabild herangezogen.

Dabei hat es sich auch als vorteilhaft erwiesen, wenn die am Umfang angeordnete Düse bzw. Düsen am Umfang rotierbar ausgebildet ist bzw. sind, wobei diese durch einen Motor angetrieben werden können.

Die rotierbare Düse kann immer genau in die Richtung gedreht werden zu der entgegengesetzt der Kopf bewegt werden soll. Die Steuerung des Kopfes wird dadurch deutlich verfeinert. Es ist denkbar, daß die Umfangsdüse(n) auch mittig auf der Mittelachse des Kopfes angeordnet und um diese drehbar gelagert sind.

Äußerst vorteilhaft ist es dabei auch, wenn die Umfangsdüse als Breitstrahldüse ausgebildet ist.

Der breite Wasserstrahl sorgt für eine Stabilisierung des Kopfes. So kann mit Hilfe der Umfangsdüsen der Kopf aus noch im Rohr befindlichem Wasser gehoben werden. Durch den breiten Wasserstrahl liegt der Kopf dann sicher. Ein Wegkippen ist ausgeschlossen. Auch wenn seitlich noch Streben oder dergleichen vorgesehen sind, die auf die Umfangsdüsen folgende Teile befestigen, so werden diese durch den breiten Strahl umspült und fallen so nicht ins Gewicht.

Erfindungsgemäß hat es sich auch als äußerst vorteilhaft erwiesen, wenn die Umfangsdüse leicht nach hinten geneigt ist oder neigbar ausgebildet ist.

Durch die Neigung nach hinten wird durch die Umfangsdüse selbst ein Vortrieb erzeugt. Durch Einstellung der Neigung kann zwischen Vortrieb, Neutral und Rücktrieb gewechselt werden.

Gemäß einer vorteilhaften Weiterbildung der Erfindung kann auch ein Lagesensor, beispielsweise ein Gravitationssensor vorgesehen sein.

Durch den Lagesensor wird die Bedienung vereinfacht. Es kann quasi ein künstlicher Horizont erzeugt werden.

Eine weitere sehr vorteilhafte Ausgestaltung der Erfindung liegt auch vor, wenn eine Längenerfassung vorgesehen ist, um die Einfahrlänge in das jeweilige Rohr zu erfassen.

Zum Beispiel mit einem Inkrementalgeber an der Haspel für den Reinigungsschlauch kann die Einfahrlänge und damit die Längenposition im Rohr erfasst werden. Diese Information kann in das Kamerabild eingeblendet werden und ist so sehr leicht dokumentierbar.

Weiterhin hat es sich als sehr vorteilhaft erwiesen, wenn der Reinigungskopf eine oder mehrere Reinigungsdüsen aufweist, die wahlweise ansteuer- und schaltbar ausgebildet sind.

Damit kann eine gezielte Reinigung vorgenommen werden, bzw. die Reinigunsfunktion abgeschaltet werden, auch wenn der Hochdruckschlauch unter Druck steht um besser einfahren zu können.

Gemäß einer weiteren Ausgestaltung der Erfindung ist es auch sehr vorteilhaft, wenn eine Einrichtung zur Versorgung des Reinigungskopfes mit Reinigunsgflüssigkeit, insbesondere Wasser vorgesehen ist.

Damit wird der Reinigungskopf mit dem notwendigen Reinigungsmittel unter dem richtigen Druck versorgt. Es können handelsübliche Hochdruckpumpen, die für Rohrreinigungsgeräte einsetzbar sind, verwendet werden.

Dabei hat es sich auch als eine sehr vorteilhafte Weiterbildung der Erfindung erwiesen, wenn diese auch unterschiedliche Drücke liefern kann.

Hierdurch kann schon eine sehr gute Steuerung der Düsen vorgenommen werden. So ist es denkbar, daß bestimmte Düsen erst ab einem bestimmten Druck öffnen.

Gemäß einer weiteren Ausgestaltung der Erfindung ist es auch sehr vorteilhaft, wenn eine Steuereinrichtung vorgesehen ist, mit der die Funktionen des Reinigungskopfes und/oder der Kamera steuerbar sind.

Damit lassen sich alle Funktionen sehr einfach ansteuern und kontrollieren. Eine Aufzeichnung des Kamerabildes ist denkbar.

Erfindungsgemäß sehr vorteilhaft ist es, wenn zwischen Steuereinrichtung und Reinigungskopf bzw. Kamera eine analoge oder digitale Datenübertragung vorgesehen ist, die beispielsweise im Frequenzmultiplexverfahren betrieben werden kann.

Damit kann - den anzusteuernden bzw. zu übertragenden Funktionen bzw. Daten angepasst - eine Übertragung realisiert werden. Oftmals ist es ausreichend, wenn zwei Trägerfrequenzen eingesetzt werden, wobei auf die erste Trägerfrequenz das Kamerabild aufmoduliert wird und auf die zweite Trägerfrequenz die Steuersignale aufmoduliert werden. Damit ergibt sich eine analoge, bidirektionale Signalübertragung, die ausreichend störunanfällig ist.

Weiterhin ist es äußerst vorteilhaft, wenn der Reinigungskopf bzw. die Kamera eine mit der Reinigungsflüssigkeit antreibbare Turbine aufweist, die diese mit elektrischer Energie zu versorgen vermag und/oder daß eine Versorgung über das Coaxialkabel, vorzugsweise mit Gleichspannung vorgesehen ist.

Beide Varianten der Energieversorgung sind denkbar. Es ist ebenfalls denkbar, daß diese Varianten sich unterstützen und so für eine größere Betriebssicherheit sorgen.

Dabei hat es sich auch als äußerst vorteilhaft erwiesen, wenn im Reinigungskopf bzw. in der Kamera ein Energiespeicher vorgesehen ist.

Damit können zumindest kurze Ausfälle der Energieversorgung überbrückt werden.

Eine weitere erfindungsgemäß sehr vorteilhafte Ausgestaltung liegt auch vor, wenn der Reinigungskopf modular ausgebildet ist und mit verschiedenen Vorsätzen beispielsweise zur Reinigung von Rohren bestückbar ist.

Damit kann die Vorrichtung für verschiedenste Einsatzzwecke eingesetzt werden.

Im folgenden wird die Erfindung anhand eines Ausführungsbeispiel veranschaulicht.

Dabei zeigen:
- Fig. 1: eine Darstellung einer erfindungsgemäßen Vorrichtung,
- Fig. 2: eine Detaildarstellung eines Reinigungskopfes,

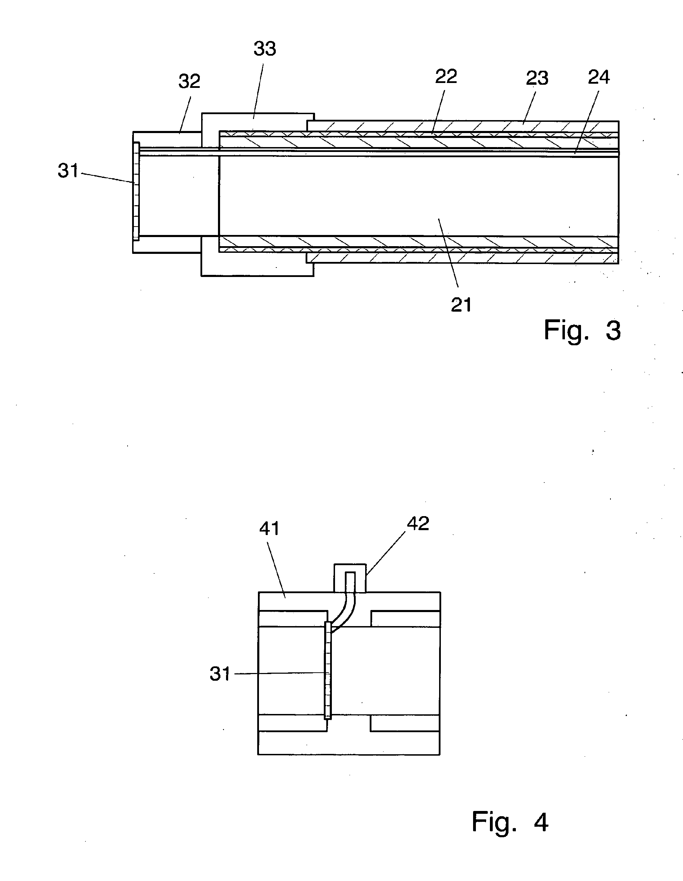

- Fig. 3: eine Detaildarstellung eines Hochdruckschlauches mit Endstück, und
- Fig. 4: eine Detaildarstellung eines Hochdruckschlauches mit Auskopplung.

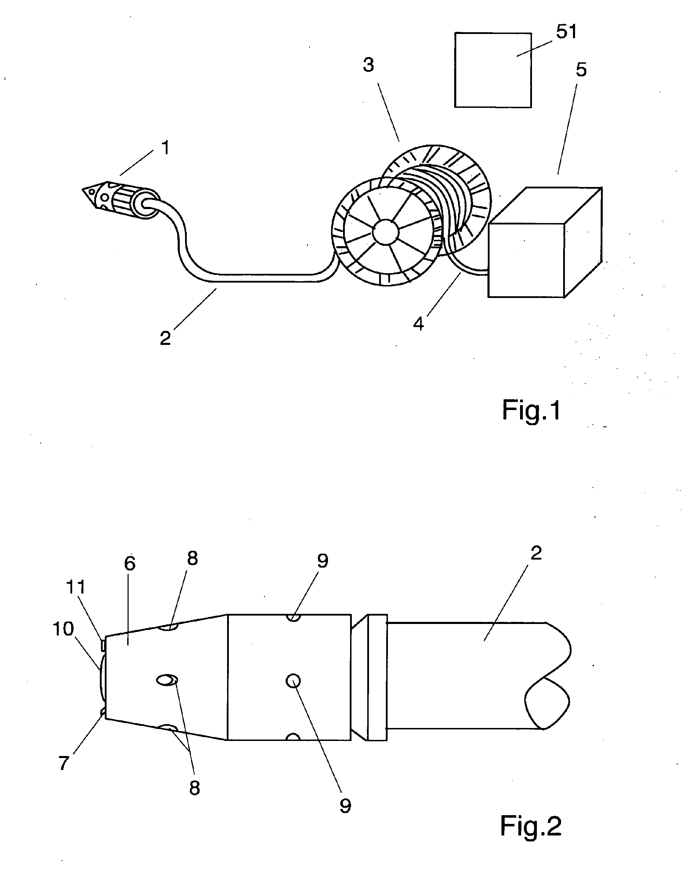

Mit 1 ist in Fig. 1 ein Reinigungskopf eines Kanalreinigungsgerätes bezeichnet. Dieser Reinigungskopf 1 ist an einem Hochdruckschlauch 2 befestigt, über den der Reinigungskopf 1 mit Spülwasser versorgt wird. Das vom Reinigungskopf 1 abgewandet Ende des Hochdruckschlauches 2 ist auf einer Trommel 3 aufgewickelt. In die Trommel 3 wird Spülwasser über einen Anschluß 4 aus einer Hochdruckpumpe 5 eingespeist.

Die Hochdruckpumpe 5 kann mit der Trommel 5 zu einer Einheit verbunden sein, oder aber getrennt und damit universell einsetzbar ausgeführt sein.

Die vorliegende Erfindung wird meistens für kleine Rohrdurchmesser eingesetzt, die meist zwischen 100 und 250 Millimeter betragen. Trotzdem kann als Hochdruckpumpe 5 auch ein Pumpenfahrzeug eingesetzt werden, das normalerweise für größere Rohrreinigungsgeräte vorgesehen ist. Hierfür kann es eventuell notwendig sein, daß eine Drossel, ein Druckminderer oder dergleichen zwischengeschaltet wird.

Der Hochdruckschlauch 2 für kleine Rohrdurchmesser weist meistens einen Durchmesser von dreiachtel Zoll auf, wohingegen für große Rohrdurchmesser, wie sie bei Hauptkanälen vorkommen oftmals Schläuche eingesetzt werden, mit halb, dreiviertel oder gar ein Zoll oder mehr Durchmesser.

Der Reinigungskopf 1 besteht im wesentlichen aus einer Dreckfräse 6, die mit einer nach vorne gerichteten Spüldüse 7, und drei nach hinten gerichteten Spül- und Vortriebsdüsen 8 ausgerüstet ist. Andere Reinigunsgvorsätze sind ebenso denkbar, wie unterschiedliche Düsenanordnungen für die einzelnen durch die Düsen 7 bzw. 8 entweichenden Wasserstrahlen.

Es ist in diesem Zusammenhang auch denkbar, daß die Düsen 7 bzw. 8 einzeln oder gemeinsam steuerbar ausgebildet sind. So können die Düsen beispielsweise mit Ventilen ausgerüstet sein, die erst bei einem bestimmten Druck der Spülflüssigkeit öffnen.

Zusätzlich sind am dem Schlauch 2 zugewandten Ende des Reinigungskopfes 1 nach außen gerichtete Steuerdüsen 9 vorgesehen, die gezielt und einzeln ansteuerbar Steuerstrahlen erzeugen können, die den Reinigungskopf 1 jeweils in die entgegengesetzte Richtung des jeweiligen Steuerstrahls zu bewegen vermögen.

Durch diese Steuerdüsen 9 wird es möglich, nicht nur den Reinigungskopf 1 nach links oder rechts, sondern auch nach oben und im Extremfall bei einer abknickenden Rohrleitung auch nach unten bewegt werden.

Es ist in diesem Zusammenhang auch denkbar, daß nur eine Steuerdüse 9 vorgesehen ist, die jedoch um die Längsachse des Reinigungskopfes 1 gedreht werden und so in alle Richtungen wirken kann. Dabei kann die Steuerdüse als Breitstrahldüse ausgeführt sein. Durch den breiten Wasserstrahl wird dafür gesorgt daß der Reinigungskopf 1 beim Einsatz der Steuerdüse 9 nicht wegkippt. Dies ist besonders dann wichtig, wenn der Reinigungskopf 1 durch den Einsatz der Steuerdüse 9 angehoben wird. Der Reinigungskopf 1 ruht dann sicher in der gewünschtem, durch den Wassserdruck definierten Höhe im Rohr. Durch leichtes Schwenken der Steuerdüse 9 kann der Reinigungskopf 1 nach links und rechts bewegt werden.

Durch den breiten Wasserstrahl können auch Verstrebungen im Reinigungskopf 1 umspült werden, so daß diese die Wirkung des Wasserstrahls nicht negativ beeinflussen. In solchen Verstrebungen können Steuerleitungen und/oder Wasserkanäle angeordnet sein. So kann in einer solchen Verstrebung ein Wasserkanal zu einer Düse zur Kamerascheibenreinigung vorgesehen sein, der die Kamerascheibe mit etwa 20 bar zu reinigen vermag.

Hierbei ist es auch denkbar, daß ein Gravitationssensor oder eine andere Lageerkennungseinrichtung vorgesehen ist, um einen künstlichen Horizont zu schaffen, der eine Steuerung der Steuerdüse 9 erleichtert. Dabei kann auch noch eine Lageerkennung des Kopfes relativ zum künstlichen Horizont zum Beispiel mit einem Inkrementalgeber vorgesehen sein. Allerdings ist auch ein manueller Nullabgleich denkbar. Dies bedeutet, die Steuerdüse 9 wird durch Ausprobieren in die erste gewünschte Position gebracht.

Der die Steuerdüse 9 verlassende Wasserstrahl kann leicht nach hinten geneigt sein und so einen eigenen Vortrieb erzeugen. Je nach Grad der Neigung wird der Vortrieb verändert. Ist der Wasserstrahl senkrecht auf der Reinigungskopflängsachse ausgerichtet, wird kein Vortrieb erzeugt. Nach vorne gerichtet wird ein Rücktrieb erzeugt.

Es ist dabei auch denkbar, daß die Neigung aus der Ferne eingestellt werden kann.

Mit diesen Steuerstrahlen lässt sich der Reinigungskopf sehr einfach um Ecken oder in Abzweige hineinbugsieren. Das Einfahren des Reinigungskopfes 1 wird dadurch erleichtert. Zudem kann der Reinigungskopf 1 auch aus noch im Rohr vorhandenem Restwasser herausgehoben werden um freie Sicht für die Kamera zu haben.

Die Steuerdüsen 9 werden dazu einzeln und meist kurzzeitig angesteuert. Die Versorgung der Steuerdüsen 9 erfolgt mit Spülflüssigkeit.

Um nun eine leichte Unterscheidung zwischen Spülfunktion und Steuerfunktion zu erhalten können hierfür unterschiedliche Drücke des Spülwassers vorgesehen werden. So ist es denkbar, daß bei einem niedrigen Druck die Steuerdüsen 9 aktiv sind und bei einem höheren Druck die Reinigungsdüsen 7 und die Vortriebsöffnungen 8.

Es ist aber auch denkbar, daß alle Düsen 7, 8 und 9 ausschließlich elektrisch gesteuert werden.

Zur Kontrolle der Rohrreinigung und auch der Bewegung durch die Steuerdüsen 9 ist eine Kamera 10 am Reinigungskopf 1 vorgesehen, mit der das Rohr und die Position des Reinigungskopfes 1 überwacht werden kann.

Da in den Rohren im Allgemeinen Dunkelheit herrscht, ist noch eine Beleuchtungseinrichtung 11 vorgesehen, welche das Sichtfeld der Kamera 10 auszuleuchten vermag.

Kamera 10 und Beleuchtungseinrichtung 11 können unter einer Schutzhaube angeordnet sein. Es ist in diesem Zusammenhang auch denkbar, daß eine weitere Wasserdüse zur Reinigung der Kameraoptik und/oder der Beleuchtungseinrichtung 11 vorgesehen ist, oder daß dies durch die bestehenden Düsen erledigt werden kann.

Im Allgemeinen wird die Vorrichtung so eingesetzt, daß zunächst der Reinigungskopf 1 durch die jeweiligen Rohre gezogen bzw. geschoben wird und dabei das Rohr gereinigt und gespült wird. Nur wenn Abzweigungen oder Bögen anstehen, die nicht direkt durchfahren werden können, wird kurzzeitig die Kamera 10 eingeschaltet um die richtige Lage und Auswahl der Abzweigung zu kontrollieren und auch sicherzustellen, daß der Reinigungskopf 1 durch die Steuerdüsen 9 in die richtige Richtung gedrückt wird.

Um nun auch die jeweilige Position im Rohr feststellen zu können kann ein nicht dargestellter Inkrementalgeber oder dergleichen zum Beispiel an der Schlauchtrommel vorgesehen sein, über den die Einschublänge erfasst wird. Andere Erfassungsmethoden sind denkbar.

Der ermittelte Längenwert kann beispielsweise in das Kamerabild eingeblendet werden. Diese können dann aufgezeichnet und damit protokolliert werden.

Wenn der Spülvorgang abgeschlossen ist, wird der Reinigungskopf 1 wieder zurückgezogen. Dabei ist die Kamera aktiviert um die ordungsgemäße Reinigung zu dokumentieren und das Rohr auf etwaige Beschädigungen zu untersuchen.

Sollten ungenügend gereinigte Bereiche festgestellt werden, so können diese dofort und ohne daß eine andere Vorrichtung eingeführt werden müsste, nachgereinigt werden.

Gerade bei der Dokumentation und der Kanalsinspektion kann auch eine Lageerkennung für die Kamera vorgesehen sein, über die beispielsweise ein künstlicher Horizont erzeugt werden kann.

Zur Steuerung der Funktionen des Reinigungskopfes 1, zur Übertragung des Kamerasignales und zur Energieversorgung wird der Hochdruckschlauch 2 genutzt.

Hochdruckschläuche 2 sind doppellagig ausgebildet, wobei ein Innenschlauch 21 von einem Metallgeflecht 22 umgeben ist. Das Metallgeflecht 22 wiederum wird von einer Außenhülle 23 vor Beschädigungen geschützt.

Weder der Innenschlauch 21 noch die Außenhülle 23 sind in der Lage, den hohen Drücken von 100 bar und mehr zu widerstehen. Erst das Metallgeflecht 22 sorgt für die erforderliche Widerstandskraft.

Im Inneren des Hochdruckschlauches 2 ist ein Innenleiter 24 vorgesehen, über den Signale, vor allem auch Hochfrequenzsignale für die Bildübertragung übertragen werden können. Das Metallgeflecht 22 dient dabei als Außenleiter und bildet zusammen mit dem Innenleiter ein Coaxialkabel, das sehr resistent gegenüber Störeinstrahlung ist. Ebenso werden Abstrahlungen verhindert.

Auch die Energieversorgung des Reinigungskopfes 1 mit seinen Düsen und der Kamera 10 kann über das gebildete Coaxialkabel erfolgen.

Um Störungen zwischen Signalübertragung und Energieversorgung zu verhindern, bietet es sich an, die Energieversorgung mit Gleichstrom vorzunehmen. Es ist aber auch denkbar, niederfrequenten Wechselstrom einzusetzen.

Auf eine erste Trägerfrequenz wird das Bildsignal der Kamera 10 aufmoduliert und vom Reinigungskopf 1 über den Hochdruckschlauch übertragen. Auf eine zweite Trägerfrequenz werden die Signalübermittlungen der Steuerfunktionen über den Hochdruckschlauch 2 zum Reinigungskopf 1 übertragen.

Es ist dabei auch denkbar, daß auch Rückmeldungen für bestimmte Funktionen vom Reinigungskopf 1 nach außen übertragen werden. So kann beispielsweise auch ein Lagesignal auf diese Art und Weise übertragen werden.

Analoge und digitale Übertragungstechniken können hier eingesetzt werden.

Der Innenleiter 24 behindert den Wasserdurchfluß nicht.

Für eine sichere Kontaktierung zwischen Hochdruckschlauch 2 und Reinigungskopf 1 wird für den Innenleiter 24 ein Kontaktring 31 in einem Anschlußstück 32 am Ende des Hochdruckschlauches 2 angeordnet, vorgesehen.

Ein solches Anschlußstück 32 ist in der Regel mit einer Presshülse 33 auf den Hochdruckschlauch 2 aufgepresst. Um dort einen sicheren Halt zu ermöglichen wird im Bereich der Presshülse 33 die Außenhülle 23 entfernt und die Presshülse 33 direkt auf das Metallgeflecht 22 aufgepresst. Das Anschlußstück 32 ist somit in der Lage, eine elektrische Verbindung zwischen dem Metallgeflecht 22, also dem Außenleiter und dem Reinigungskopf 1 herzustellen. Der Kontaktring 31 muss gegenüber dem restlichen Anschlußstück 32 isoliert sein.

Es können hier bekannte und damit handelsübliche und genormte Anschlußstücke 32 eingesetzt werden, die um den Kontaktring 31 ergänzt sind.

Dies eröffnet auch die Möglichkeit, daß anstatt des erfindungsgemäßen Reinigungskopfes 1 auch, wenn es denn nötig sein sollte, ein herkömmlicher Reinigungskopf aufgesetzt werden kann.

Am vom Reinigungskopf 1 abgewandten Ende des Hochdruckschlauches 2 ist ein weiteres Anschlußstück 32 mit Kontaktring 31 vorgesehen. Dieses ist an einem Zwischenstück 41 angeschlossen, das eine Kontaktierung von Innenleiter und Außenleiter nach außen führt und dort beispielsweise als handelsübliche Coax-Buchse 42 zur Verfügung stellt.

Auf das Zwischenstück 41 kann dann ein bekannter Hochdruckschlauch folgen, der eine Verbindung zur Hochdruckpumpe 5 herstellt.

Die übertragenen Signale werden zu einer Kontroll- und Steuerungseinheit 51 geleitet, die einerseits die Kamerasignale darstellen und/oder aufzeichnen kann und andererseits die Steuerung der Funktionen des Reinigungskopfes 1 ermöglicht.

## Patentansprüche

1. Vorrichtung zum Untersuchen und Reinigen von Rohren und Leitungen, insbesondere von Abwasserleitungen, wobei ein Reinigungskopf (1) vorgesehen ist, der zusätzlich mit einer Kamera (10) ausgerüstet ist, wobei beides an einem Ende eines Hochdruckschlauches (2) angeordnet ist, wobei eine coaxiale Leitungsverbindung zwischen Reinigungskopf (1) und abgewandtem Ende des Hochdruckschlauches (2) vorgesehen ist, **dadurch gekennzeichnet, daß** der Außenleiter durch das Mantelgeflecht (22) des Hochdruckschlauches gebildet und ein Innenleiter (24) im Inneren des Hochdruckschlauches vorgesehen ist und daß der Reinigungskopf (1) eine oder mehrere am Umfang angeordnete Steuerdüsen (9) aufweist, die wahlweise ansteuer- und schaltbar ausgebildet sind und zum Positionieren und Bewegen des Reinigungskopfes (1) im Rohr dienen.

2. Vorrichtung nach Anspruch 1, **dadurch gekennzeichnet, daß** ein Endstück (32) am dem Reinigungskopf (1) zugewandten Ende des Hochdruckschlauches (2) vorgesehen ist, das zwischen dem Reinigungskopf (1) und dem Hochdruckschlauch (2) eine elektrische Verbindung in Bezug auf Innen- (24) und Außenleiter (22) herzustellen vermag.

3. Vorrichtung nach Anspruch 1 oder 2, **dadurch gekennzeichnet, daß** am vom Reinigungskopf (1) abgewandten Ende des Hochdruckschlauches (2) eine Auskopplung (41) für die Coaxialverbindung vorgesehen ist.

4. Vorrichtung nach einem der vorangehenden Ansprüche, **dadurch gekennzeichnet, daß** die am Umfang angeordnete Düse bzw. Düsen (9) am Umfang rotierbar ausgebildet ist bzw. sind, wobei diese durch einen Motor angetrieben werden können.

5. Vorrichtung nach einem der vorangehenden Ansprüche, **dadurch gekennzeichnet, daß** die Umfangsdüse (9) als Breitstrahldüse ausgebildet ist.

6. Vorrichtung nach einem der vorangehenden Ansprüche, **dadurch gekennzeichnet, daß** die Umfangsdüse (9) entgegen der Arbeits- und Einschubrichtung der Vorrichtung leicht nach hinten geneigt ist oder neigbar ausgebildet ist.

7. Vorrichtung nach einem der vorangehenden Ansprüche, **dadurch gekennzeichnet, daß** ein Lagesensor, beispielsweise ein Gravitationssensor vorgesehen ist.

8. Vorrichtung nach einem der vorangehenden Ansprüche, **dadurch gekennzeichnet, daß** eine Längenerfassung vorgesehen ist, um die Einfahrlänge in das jeweilige Rohr zu erfassen.

9. Vorrichtung nach einem der vorangehenden Ansprüche, **dadurch gekennzeichnet, daß** der Reinigungskopf (1) eine oder mehrere Reinigungsdüsen und Vortriebdüsen (7, 8) aufweist, die wahlweise ansteuer- und schaltbar ausgebildet sind.

10. Vorrichtung nach einem der vorangehenden Ansprüche, **dadurch gekennzeichnet, daß** eine Einrichtung (5) zur Versorgung des Reinigungskopfes (1) mit Reinigungsflüssigkeit, insbesondere Wasser vorgesehen ist.

11. Vorrichtung nach Anspruch 10, **dadurch gekennzeichnet, daß** diese auch unterschiedliche Drücke liefern kann.

12. Vorrichtung nach einem der vorangehenden Ansprüche, **dadurch gekennzeichnet, daß** eine Steuereinrichtung (51) vorgesehen ist, mit der die Funktionen des Reinigungskopfes und/oder der Kamera steuerbar sind.

13. Vorrichtung nach einem der vorangehenden Ansprüche, **dadurch gekennzeichnet, daß** zwischen Steuereinrichtung (51) und Reinigungskopf (1) bzw. Kamera (10) eine analoge oder digitale Datenübertragung vorgesehen ist, die beispielsweise im Frequenzmultiplexverfahren betrieben werden kann.

14. Vorrichtung nach einem der vorangehenden Ansprüche, **dadurch gekennzeichnet, daß** der Reinigungskopf (1) bzw. die Kamera (10) eine mit der Reinigungsflüssigkeit antreibbare Turbine aufweist, die diese mit elektrischer Energie zu versorgen vermag und/oder daß eine Versorgung über das Coaxialkabel, vorzugsweise mit Gleichspannung vorgesehen ist.

15. Vorrichtung nach Anspruch 14, **dadurch gekennzeichnet, daß** im Reinigungskopf (1) bzw. in der Kamera (10) ein Energiespeicher vorgesehen ist.

16. Vorrichtung nach einem der vorangehenden Ansprüche, **dadurch gekennzeichnet, daß** der Reinigungskopf (1) modular ausgebildet ist und mit verschiedenen Vorsätzen beispielsweise zur Reinigung von Röhren bestückbar ist.

## Claims

1. Device for investigating and cleaning pipes and lines, particularly waste water lines, wherein a cleaning head (1) is provided, which is additionally equipped with a camera (10), wherein both are arranged at an end of a high-pressure hose (2), wherein a coaxial line connection is provided between cleaning head (1) and remote end of the high-pressure hose (2), **characterised in that** the outer line is formed by the casing braiding (22) of the high-pressure hose and an inner line (24) is provided in the interior of the high-pressure hose and that the cleaning head (1) comprises one or more control nozzles (9), which are arranged at the circumference and are constructed to be selectably activatable and switchable and which serve for positioning and moving the cleaning head (1) in the pipe.

2. Device according to claim 1, **characterised in that** an end member (32) is provided at the end of the high-pressure hose (2) remote from the cleaning head (1) and is capable of producing an electrical connection between the cleaning head (1) and the high-pressure hose (2) with respect to the inner line (24) and outer line (22).

3. Device according to claim 1 or 2, **characterised in that** a de-coupling device (41) for the coaxial connection is provided at the end of the high-pressure hose (2) remote from the cleaning head (1).

4. Device according to any one of the preceding claims, **characterised in that** the nozzle or nozzles (9) arranged at the circumference is or are constructed to be rotatable at the circumference, wherein this or these can be driven by a motor.

5. Device according to any one of the preceding claims, **characterised in that** the circumferential nozzle (9) is constructed as a wide-jet nozzle.

6. Device according to any one of the preceding claims, **characterised in that** the circumferential nozzle (9) is slightly rearwardly inclined or constructed to be inclinable relative to the working and advance direction of the device.

7. Device according to any one of the preceding claims, **characterised in that** a position sensor, particularly a gravitation sensor, is provided.

8. Device according to any one of the preceding claims, **characterised in that** a length detection device is provided in order to detect the length of movement into the respective pipe.

9. Device according to any one of the preceding claims, **characterised in that** the cleaning head (1) comprises one or more cleaning nozzles and propulsion nozzles (7, 8), which are constructed to be selectably activatable and switchable.

10. Device according to any one of the preceding claims, **characterised in that** equipment (5) for supply of the cleaning head (1) with cleaning liquid, particularly water, is provided.

11. Device according to claim 10, **characterised in that** this can also deliver different pressures.

12. Device according to any one of the preceding claims, **characterised in that** control equipment (51), by which the functions of the cleaning head and/or the camera are controllable, is provided.

13. Device according to any one of the preceding claims, **characterised in that** an analog or digital data transfer means, which can, for example, be operated in the frequency multiplex method, is provided between the control equipment (51) and cleaning head (1) or camera (10).

14. Device according to any one of the preceding claims, **characterised in that** the cleaning head (1) or the camera (10) comprises a turbine which is drivable by the cleaning liquid and which is capable of supplying this with electrical energy and/or that a supply, preferably with direct voltage, is provided by way of the coaxial cable.

15. Device according to claim 14, **characterised in that** an energy store is provided in the cleaning head (1) or in the camera (10).

16. Device according to any one of the preceding claims, **characterised in that** the cleaning head (1) is of modular construction and can be equipped with different attachments for, for example, the cleaning of pipes.

## Revendications

1. Dispositif pour examiner et pour nettoyer des tubes et des conduites, en particulier des conduites d'eaux usées, sachant qu'il est prévu une tête de nettoyage (1) qui est en outre équipée d'une caméra (10), sachant que les deux sont disposées à une extrémité d'un tuyau souple (2) pour haute pression, sachant qu'il est prévu une liaison câblée coaxiale entre la tête de nettoyage (1) et l'extrémité du tuyau souple (2) pour haute pression qui en est éloignée, **caractérisé en ce que** le conducteur extérieur est formé par la tresse d'enveloppe (22) du tuyau souple pour haute pression et un conducteur intérieur (24) est prévu à l'intérieur du tuyau souple pour haute pression, et **en ce que** la tête de nettoyage (1) présente une ou plusieurs buses de commande (9) disposées sur la périphérie, qui sont conçues de manière à pouvoir être sélectivement asservies et activées et qui servent à positionner et à déplacer la tête de nettoyage (1) dans le tube.

2. Dispositif selon la revendication 1, **caractérisé en ce qu'**un embout (32) est prévu à l'extrémité du tuyau souple (2) pour haute pression qui est tournée vers la tête de nettoyage (1), embout qui permet de réaliser entre la tête de nettoyage (1) et le tuyau souple (2) pour haute pression une liaison électrique concernant le conducteur intérieur (24) et le conducteur extérieur (22).

3. Dispositif selon la revendication 1 ou 2, **caractérisé en ce qu'**un moyen de découplage (41) pour la liaison coaxiale est prévue à l'extrémité du tuyau souple (2) pour haute pression qui est éloignée de la tête de nettoyage (1).

4. Dispositif selon l'une des revendications précédentes, **caractérisé en ce que** la ou les buses (9) disposées sur la périphérie est ou sont conçues rotatives sur la périphérie, sachant qu'elles peuvent être entraînées par un moteur.

5. Dispositif selon l'une des revendications précédentes, **caractérisé en ce que** la buse périphérique (9) est réalisée sous la forme d'une buse à faisceau large.

6. Dispositif selon l'une des revendications précédentes, **caractérisé en ce que** la buse périphérique (9) est conçue légèrement inclinable vers l'arrière ou est légèrement inclinée vers l'arrière, à l'encontre de la direction de travail et d'insertion du dispositif.

7. Dispositif selon l'une des revendications précédentes, **caractérisé en ce qu'**il est prévu un capteur de position, par exemple un capteur de gravité.

8. Dispositif selon l'une des revendications précédentes, **caractérisé en ce qu'**il est prévu une détection de longueur afin de détecter la longueur d'introduction dans le tube respectif.

9. Dispositif selon l'une des revendications précédentes, **caractérisé en ce que** la tête de nettoyage (1) présente une ou plusieurs buses de nettoyage et d'avancement (7, 8) qui sont conçues de manière à pouvoir être sélectivement asservies et activées.

10. Dispositif selon l'une des revendications précédentes, **caractérisé en ce qu'**il est prévu un équipement (5) pour alimenter la tête de nettoyage (1) en liquide de nettoyage, en particulier en eau.

11. Dispositif selon la revendication 10, **caractérisé en ce que** ce dispositif peut également délivrer différentes pressions.

12. Dispositif selon l'une des revendications précédentes, **caractérisé en ce qu'**il est prévu un équipement de commande (51) qui permet de commander les fonctions de la tête de nettoyage et/ou de la caméra.

13. Dispositif selon l'une des revendications précédentes, **caractérisé en ce que**, entre l'équipement de commande (51) et la tête de nettoyage (1) respectivement la caméra (10), il est prévu une transmission de données analogique ou numérique qui peut être par exemple exploitée selon la méthode de multiplexage en fréquence.

14. Dispositif selon l'une des revendications précédentes, **caractérisé en ce que** la tête de nettoyage (1), respectivement la caméra (10), présente une turbine qui peut être entraînée par le liquide de nettoyage et qui permet d'alimenter ce dispositif en énergie électrique, et/ou **en ce qu'**il est prévu une alimentation par l'intermédiaire du câble coaxial, de préférence en tension continue.

15. Dispositif selon la revendication 14, **caractérisé en ce qu'**un accumulateur d'énergie est prévu dans la tête de nettoyage (1), respectivement dans la caméra (10).

16. Dispositif selon l'une des revendications précédentes, **caractérisé en ce que** la tête de nettoyage (1) est conçue modulaire et peut être équipée de différents accessoires, par exemple pour le nettoyage de tubes.
